# EUROPEAN PATENT APPLICATION

(11) **EP 4 826 530 A1**
(43) Date of publication of application: **21.10.2026**
(21) Application number: 24914812.3
(22) Date of filing: 08.08.2024
(51) Int. Cl.: G06F 9/48

(54) **PROCESS INITIALIZATION METHOD AND RELATED DEVICE**

(30) Priority: 05.01.2024 CN 202410030435
(71) Applicant: Huawei Technologies Co., Ltd., Shenzhen, Guangdong 518129 (CN)
(72) Inventor: WANG, Shibin, Shenzhen, Guangdong 518129 (CN); ZHAO, Junhua, Shenzhen, Guangdong 518129 (CN)
(74) Representative: Goddar, Heinz J.
(86) International application number: PCT/CN2024/110582
(87) International publication number: WO 2025/145590

(57) **Abstract**

Embodiments of this application disclose a process initialization method and a related device. The method may be used to initialize at least two processes in the device. The method includes: An execution management module triggers initialization of all processes in a process set, where the process set includes a first process and a second process. If the first process determines that the first process depends on a first service, an initialization procedure of the first process is divided into a first step and a second step, and the first process performs the first step and sends, to the first module, subscription information indicating to subscribe to a service ready notification of the first service. When completing initialization of the first service, the second process sends, to the first module, first information indicating that the first service is ready. The first module sends, to the first process based on the subscription information, second information indicating that the first service is ready. In response to the received second information, the first process triggers to continue to perform the second step. This helps improve efficiency of an initialization procedure of the entire process set.

## Description

This application claims priority to Chinese Patent Application No. 202410030435.4, filed with the China National Intellectual Property Administration on January 5, 2024 and entitled "PROCESS INITIALIZATION METHOD AND RELATED DEVICE", which is incorporated herein by reference in its entirety.

### TECHNICAL FIELD

Embodiments of this application relate to the field of computer technologies, and in particular, to a process initialization method and a related device.

### BACKGROUND

A plurality of processes are usually deployed in operating systems of various electronic devices. In initialization procedures of the plurality of processes, there may be a dependency between different processes in the plurality of processes. For example, the plurality of processes may include a process 1 and a process 2, and execution of the process 1 depends on a service provided by the process 2. Therefore, in the initialization procedures of the plurality of processes, a solution used in the related technology is to initialize the process 2, and then start to initialize the process 1 after initialization of the process 2 is completed.

However, in the initialization procedures of the plurality of processes, processes that have a dependency are serially initialized, which makes the initialization procedures of the plurality of processes time-consuming.

### SUMMARY

Embodiments of this application provide a process initialization method and a related device, to shorten total duration of an initialization procedure of an entire process set, and help improve efficiency of the initialization procedure of the entire process set.

According to a first aspect, an embodiment of this application provides a process initialization method. The method may be used to initialize at least two processes in a device (referred to as a first device subsequently for ease of description). In the method, an execution management module in the first device starts all processes in a process set, to trigger initialization of all the processes in the process set, where the process set includes at least two processes that need to be initialized, and the at least two processes include a first process and a second process.

The first process in the first device performs a first step and sends subscription information to a first module in the first device. The subscription information indicates to subscribe to a service ready notification of a first service, when the first process determines that the first process depends on the first service, an initialization procedure of the first process is divided into the first step and a second step, execution of the first step does not depend on a service provided by another process in the process set, and execution of the second step depends on the first service provided by the second process. For example, the first step includes a part of the entire initialization procedure of the first process, and execution of the part of the procedure included in the first step does not depend on the service provided by the another process in the process set. The second step includes a procedure other than the first step in the entire initialization procedure of the first process. It should be noted that the first process may simultaneously perform the first step and send the subscription information to the first module; or the first process may send the subscription information to the first module after performing the first step; or perform the first step after sending the subscription information to the first module.

When the second process in the first device completes initialization of the first service, the second process may send first information to the first module, where the first information indicates that the first service is ready. After determining that the first service provided by the second process is ready, the first module may determine, based on the received subscription information, which processes subscribe to the service ready notification of the first service, and further send second information to each first process that subscribes to the service ready notification of the first service, where the second information indicates that the first service is ready. After receiving the second information, in response to the received second information, the first process triggers to continue to perform the second step, to complete the initialization procedure of the first process.

In this implementation, the execution management module starts all the processes that need to be initialized, and all the processes that need to be initialized may start to be initialized in parallel. Because the first process depends on the first service of the second process, the entire initialization procedure of the first process is divided into the first step and the second step. Execution of the first step does not depend on the service provided by the another process in the process set, and execution of the second step depends on the first service provided by the second process. After completing the first step, the first process may send the subscription information to the first module, to subscribe to the service ready notification of the first service. When completing initialization of the first service, the second process sends the first information to the first module, to notify the first module that the first service is ready. In this case, the first module may send the second information to the first process, to notify a third process that the first service is ready, to trigger the third process to continue to perform the second step. Based on the foregoing solutions, some steps in initialization procedures of the first process and the second process that have a dependency are performed in parallel. In comparison with a complete serial manner, total duration consumed by initialization procedures of the entire process set is shortened, and this helps improve efficiency of the initialization procedures of the entire process set.

In a possible implementation, in the method, the first module may store preset configuration information, the preset configuration information indicates a service able to be provided by each of at least one third process, the process set includes the at least one third process, and the second process is one of the at least one third process. For example, in a case, all processes included in the at least one third process may be a subset of the process set, and each of the at least one third process can provide a service for another process in the process set. In another case, a range of "the at least one third process" is the same as that of "the process set", that is, each process in the process set is a third process, and the configuration information indicates a service that can be provided by each process in the process set. The first module may further determine, based on the preset configuration information, at least one service able to be provided by the second process. That the first module sends the second information to the first process may include: When the first module determines that the at least one service able to be provided by the second process includes the first service, the first module sends the second information to the first process.

In this implementation, the preset configuration information indicates the at least one service that can be provided by each of the at least one third process. In this case, after receiving the first information from the second process, the first module can determine, based on the preset configuration information, whether the at least one service provided by the second process includes the first service in the first information, and the second information is sent to the first process only when the at least one service that can be provided by the second process includes the first service. Therefore, when another process spoofs the second process to send a service ready notification of the first service to the first module, the first module can identify the service ready notification in time, to help improve accuracy of the second information sent by the first module to the first process. This further prevents the first process from being stuck when performing the second step, to ensure smoothness of the initialization procedure.

In a possible implementation, in the method, the first module may store the preset configuration information, the preset configuration information indicates at least one service on which each of at least one fourth process is able to depend, the process set includes the at least one fourth process, and the first process is one of the at least one fourth process. The first module may further determine, based on the preset configuration information, at least one service on which the first process is able to depend. That the first module sends the second information to the first process may include: When the first module determines that the at least one service on which the first process is able to depend includes the first service, the first module sends the second information to the first process.

In this implementation, the preset configuration information indicates at least one service on which each of the at least one fourth process can legally depend. Further, after the subscription information sent by the first process is received, whether the at least one service on which the first process can depend includes the first service in the subscription information can be determined, that is, validity of the subscription information is determined based on the configuration information. This ensures that the service ready notification can be successfully subscribed only based on a legitimate dependency, and further improves security of this solution.

In a possible implementation, in the method, the first module may further create a first communication pipeline and a second communication pipeline between the first module and the first process based on a process identifier PID of the first process, where the first communication pipeline is used to transmit the subscription information, and the second communication pipeline is used to transmit the second information; and/or the first module may further create a third communication pipeline between the first module and the second process based on a PID of the second process, where the third communication pipeline is used to transmit the first information.

In this implementation, the first module creates, based on the PID of the first process, the first communication pipeline and the second communication pipeline that are used for communication between the first module and the first process, so that the first module can determine a mapping relationship between an interface of the first communication pipeline and the PID of the first process, and a mapping relationship between an interface of the second communication pipeline and the PID of the first process. Therefore, the first module can determine, based on the mapping relationship between the communication pipeline and the PID of the process, which process information transmitted through a communication pipeline is from, to prevent a process from spoofing another process to send subscription information to the first module, that is, improve authenticity and security of a procedure of "subscribe to a ready notification of a service". In addition, after determining that the first service is ready, the first module can ensure, based on the mapping relationship between the interface of the second communication pipeline and the PID of the first process, that the process that subscribes to the ready notification of the first service can receive the second information. This ensures smoothness of the initialization procedure of the first process, and helps reduce time consumed by "all the processes in the process set to complete the initialization procedures".

The first module creates, based on the PID of the second process, the third communication pipeline used for communication between the first module and the second process, so that the first module can determine a mapping relationship between an interface of the third communication pipeline and the PID of the second process. Therefore, the first module can determine, based on the mapping relationship between the communication pipeline and the PID of the process, which process information transmitted through a communication pipeline is from, to prevent a process from spoofing another process to send first information to the first module. This improves accuracy of the first information obtained by the first module. When performing the second step in the initialization procedure, the first process needs to ensure that the first service is ready. Therefore, "improving accuracy of the first information" also helps prevent the first process from being stuck when performing the second step in the initialization procedure, and helps improve smoothness of executing the initialization procedure by the first process.

In a possible implementation, in the method, after starting all the processes in the process set, the execution management module may obtain PIDs of the processes in the process set, and further send the PIDs of the processes in the process set to the first module, where the PIDs of the processes in the process set include the PID of the first process and the PID of the second process.

The "process identifier" may also be referred to as a "process identification number". The PID is randomly allocated by an operating system when the process is run, and the PID does not change when the process is run. However, after the process stops running, the PID is reclaimed by the operating system, and may be continuously allocated to a new process that is run. In other words, when the first process is run, the PID of the first process can temporarily and uniquely point to the first process. When the second process is run, the PID of the second process can temporarily and uniquely point to the second process.

In this implementation, after starting all the processes in the process set, the execution management module can conveniently obtain the PIDs of the processes in the process set, and the execution management module sends the PIDs of the processes in the process set to the first module, so that the first module can construct a one-to-one communication pipeline between the first module and the process based on the PID of the process. This provides a convenient solution of "obtaining the PID of the process by the first module", and the PID of the process obtained by the execution management module is authentic, to further ensure authenticity of the information obtained by the first module through the communication pipeline.

In a possible implementation, the first step includes at least one of the following steps: loading a dynamic link library, reading a configuration file and a configuration parameter that are of the first process, requesting a resource used by the first process, communicating with hardware corresponding to the first process, or generating data corresponding to a service of the first process. For example, "loading the dynamic link library" includes reading an executable file related to the first process. "Requesting the resource used by the first process" may also be referred to as "requesting a system resource used by the first process". For example, the system resource may include a memory resource, a thread resource, or another system resource. "Communicating with the hardware corresponding to the first process" may be used to notify the hardware that the first process is started. For example, if the service provided by using the first process includes photographing, the hardware corresponding to the first process includes a sensor configured to capture an image. For another example, if the service provided by using the first process includes playing a song, the hardware corresponding to the first process includes a speaker and the like. For example, if the service provided by using the first process is encryption and decryption, "data corresponding to a function of the first process" includes a key used when encryption and/or decryption are/is performed. For another example, if the service provided by using the first process is playing a song, "the data corresponding to the function of the first process" includes information about the played song.

In this implementation, the foregoing descriptions provide which steps are specifically represented by the first step, to reduce implementation difficulty of this solution. The steps such as "loading the dynamic link library, reading the configuration file and the configuration parameter that are of the first process, requesting the resource used by the first process, communicating with the hardware corresponding to the first process, and generating the data corresponding to the service of the first process" in the initialization procedure do not need to depend on a service provided by another process, and are time-consuming. In the method provided in this application, when the first process depends on the first service provided by the second process, the first step performed by the first process and the initialization procedure performed by the second process are parallel. Therefore, in comparison with the first process starting to perform initialization after the second process completes initialization, larger duration of the first step indicates more time saved according to the method provided in the application.

In a possible implementation, the method is applied to a first device, and the first device is any one of the following: a vehicle, a robot, a home device, an industrial personal computer, a mobile phone, or a tablet. In this implementation, a plurality of specific product forms of the first device are provided, to greatly widen application scenarios of this solution, and improve implementation flexibility of this solution.

According to a second aspect, an embodiment of this application provides a process initialization apparatus. The apparatus may be configured to initialize at least two processes in a first device. The process initialization apparatus includes: an execution management module, configured to start all processes in a process set, to trigger initialization of all the processes in the process set, where the process set includes at least two processes that need to be initialized, and the at least two processes include a first process and a second process; the first process, configured to perform a first step and send subscription information to a first module, where the subscription information indicates to subscribe to a service ready notification of a first service, when the first process determines that the first process depends on the first service, an initialization procedure of the first process is divided into the first step and a second step, execution of the first step does not depend on a service provided by another process in the process set, and execution of the second step depends on the first service provided by the second process; the second process, configured to: when the second process completes initialization of the first service, send first information to the first module, where the first information indicates that the first service is ready; and the first module, configured to send second information to the first process based on the subscription information, where the second information indicates that the first service is ready. The first process is further configured to: in response to the received second information, trigger to continue to perform the second step.

In the second aspect of this application, the process initialization apparatus is further configured to perform steps in the first aspect and the possible implementations of the first aspect. For specific implementations of steps in the second aspect, meanings of terms, and beneficial effect brought by the second aspect, refer to the first aspect. Details are not described herein again.

According to a third aspect, an embodiment of this application provides a device, including a processor and a memory. The processor is coupled to the memory, the memory is configured to store a program, and the processor is configured to execute the program in the memory, to enable the device to perform the method in the first aspect.

According to a fourth aspect, an embodiment of this application provides a computer-readable storage medium. The computer-readable storage medium stores a computer program, and when the computer program runs on a computer, the computer is enabled to perform the method in the first aspect.

According to a fifth aspect, an embodiment of this application provides a computer program product. The computer program product includes a program, and when the program runs on a computer, the computer is enabled to perform the method in the first aspect.

According to a sixth aspect, this application provides a chip system. The chip system includes a processor, configured to support implementation of functions in the foregoing aspects, for example, sending or processing data and/or information in the foregoing method. In a possible design, the chip system further includes a memory. The memory is configured to store program instructions and data that are necessary for a terminal device or a communication device. The chip system may include a chip, or may include a chip and another discrete component.

### BRIEF DESCRIPTION OF DRAWINGS

FIG. 1 is a schematic flowchart of a process initialization method according to an embodiment of this application;
FIG. 2 is another diagram of a process initialization method according to an embodiment of this application;
FIG. 3A and FIG. 3B are a diagram of beneficial effect brought by a method according to this application;
FIG. 4A to FIG. 4C are another schematic flowchart of a process initialization method according to an embodiment of this application;
FIG. 5 is another diagram of a process initialization method according to an embodiment of this application;
FIG. 6 is a diagram of a structure of a process initialization apparatus according to an embodiment of this application; and
FIG. 7 is a diagram of a structure of a device according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed. For example, specific information may be indicated with the help of an arrangement sequence of all pieces of information that is pre-agreed (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

The method provided in this application may be applied to a scenario of initializing a process set in a device (referred to as a "first device" subsequently for ease of description). For example, the first device may be a vehicle, a robot, a home device, an industrial personal computer, a mobile phone, a tablet, or an electronic device of another type. This application provides a plurality of specific product forms of the first device, to greatly widen application scenarios of this solution, and improve implementation flexibility of this solution. It should be noted that, electronic devices to which this application may be specifically applied may be flexibly determined based on an actual application scenario. This is not limited in embodiments of this application.

When a plurality of processes in the process set are initialized, the process set may include a process 1 and a process 2. If execution of an initialization procedure of the process 1 needs to depend on a service provided by the process 2, that is, the initialization procedure of the process 1 needs to be completed when the service provided by the process 2 is in a ready state, "the service is in a ready state" in this application may also be understood as "the service is in a state in which the service can be provided for the outside". In a related technology, to meet the foregoing premise, the process 2 is initialized, and after initialization of the process 2 is completed, the initialization procedure of the process 1 starts to be executed. Because initialization of the process 1 and initialization of the process 2 are completely serial, the initialization procedure of the entire process set consumes a long time.

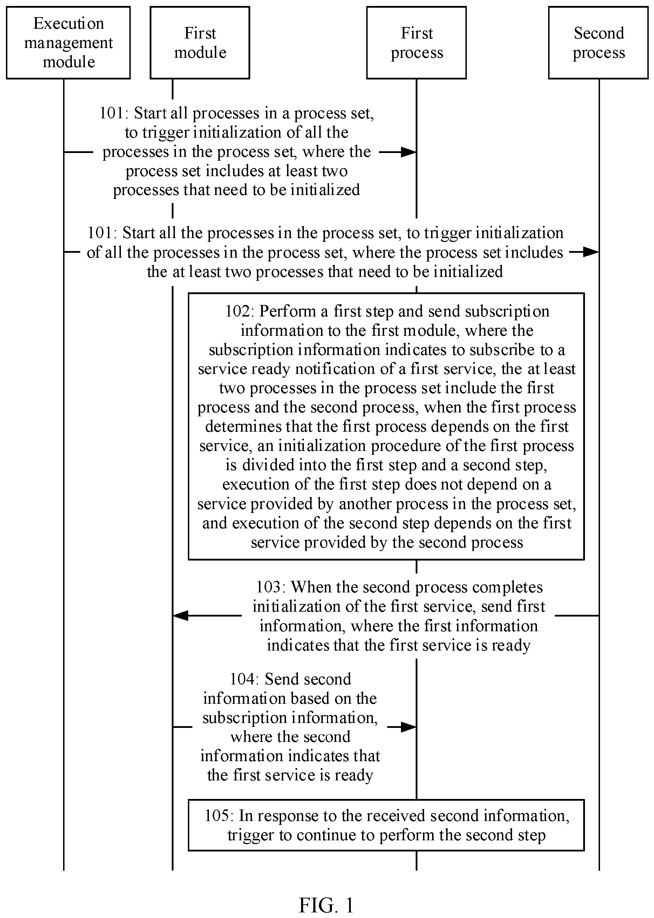

To shorten duration consumed by the initialization procedures of the entire process set, this application provides a process initialization method. The following describes a specific implementation procedure of the method provided in this application. Specifically, FIG. 1 is a schematic flowchart of a process initialization method according to an embodiment of this application. The process initialization method provided in embodiments of this application may include the following steps.

101: An execution management module starts all processes in a process set, to trigger initialization of all the processes in the process set, where the process set includes at least two processes that need to be initialized.

In embodiments of this application, the execution management (execution management, EM) module in a first device may first start a first module in the first device, to trigger the first module to start initialization. For example, both the execution management module and the first module may be specifically represented as processes.

The execution management module may further determine the process set. The process set includes all processes that need to be initialized by the first device at a current moment, and all the processes that need to be initialized have at least two processes. After the first module completes initialization, the execution management module may start all the processes in the process set, to trigger initialization of all the processes in the process set.

102: A first process performs a first step and sends subscription information to the first module, where the subscription information indicates to subscribe to a service ready notification of a first service, the at least two processes in the process set include the first process and a second process, when the first process determines that the first process depends on the first service, an initialization procedure of the first process is divided into the first step and a second step, execution of the first step does not depend on a service provided by another process in the process set, and execution of the second step depends on the first service provided by the second process.

In embodiments of this application, there is at least one legitimate first dependency between the at least two processes included in the process set, and any one of the at least one legitimate first dependency may be that one first process depends on a first service provided by one second process. For example, a service provided by using a first process includes navigation, and the first service is a positioning service. When the navigation service is provided, a location of the first device needs to be first determined by using the first service, which may be referred to as that the first process depends on the first service provided by the second process. It should be understood that the example herein is merely for ease of understanding this solution, and is not intended to limit this solution.

It should be noted that, there may be a plurality of first dependencies between the at least two processes included in the process set, "the first process" means a depending party in each first dependency, and the "second process" means a depended party that provides a service in each first dependency.

When the first process determines that the first process depends on the first service, the entire initialization procedure of the first process may be divided into the first step and the second step. Execution of the first step does not depend on the service provided by the another process in the process set, that is, each of the at least one first process does not depend on a service provided by another process in the process set when performing the first step in the initialization procedure. Execution of the second step depends on the first service provided by the second process, that is, when each first process performs the second step in the initialization procedure, the first service provided by the second process needs to be in a ready state.

For example, the first step includes a part of the entire initialization procedure of the first process, and execution of the part of the procedure included in the first step does not depend on the service provided by the another process in the process set. The second step includes a procedure other than the first step in the entire initialization procedure of the first process.

Optionally, the first step includes at least one of the following steps: loading a dynamic link library, reading a configuration file and a configuration parameter that are of the first process, requesting a resource used by the first process, communicating with hardware corresponding to the first process, generating data corresponding to a service of the first process, or another step that does not depend on a service provided by another process in the process set.

For example, "loading the dynamic link library" includes reading an executable file related to the first process. "Requesting the resource used by the first process" may also be referred to as "requesting a system resource used by the first process". For example, the system resource may include a memory resource, a thread resource, or another system resource. "Communicating with the hardware corresponding to the first process" may be used to notify the hardware that the first process is started. For example, if the service provided by using the first process includes photographing, the hardware corresponding to the first process includes a sensor configured to capture an image. For another example, if the service provided by using the first process includes playing a song, the hardware corresponding to the first process includes a speaker and the like. For example, if the service provided by using the first process is encryption and decryption, "data corresponding to a function of the first process" includes a key used when encryption and/or decryption are/is performed. For another example, if the service provided by using the first process is playing a song, "the data corresponding to the function of the first process" includes information about the played song. It should be understood that the examples herein are merely for ease of understanding of this solution, and are not intended to limit this solution.

After the execution management module starts all the processes in the process set, all the processes in the process set start to be initialized in parallel. Each of the at least one first process included in the process set may perform the first step and send the subscription information to the first module. Correspondingly, after receiving the subscription information, the first module may determine, based on the subscription information, that the first process subscribes to the service ready notification of the first service provided by the second process. For example, the first process may simultaneously perform the first step and send the subscription information to the first module; or the first process may send the subscription information to the first module after performing the first step; or perform the first step after sending the subscription information to the first module.

For example, after each first process sends the subscription information to the first module, an initialization procedure of each first process may be switched to a pause state. The pause state may also be referred to as a partial-service state, a waiting state, an aborted state, another noun, or the like.

103: When the second process completes initialization of the first service, send first information to the first module, where the first information indicates that the first service is ready.

In embodiments of this application, after the execution management module starts all the processes in the process set, all the processes in the process set start to be initialized in parallel. After completing initialization of the first service, the second process in the process set may send the first information to the first module. Correspondingly, the first module may determine, based on the first information, that the first service provided by the second process is ready.

104: The first module sends second information to the first process based on the subscription information, where the second information indicates that the first service is ready.

In embodiments of this application, when determining that the first service provided by the second process is ready, the first module may determine, based on the received subscription information, which processes subscribe to the service ready notification of the first service, and send the second information to each first process that subscribes to the service ready notification of the first service. Correspondingly, each first process may determine, based on the received second information, that the first service is ready.

For example, in a case, the second information may specifically include identity information of the first service, and the identity information of the first service is used to notify the first process that the first service is ready. In another case, the second information may include preset identification information. When the identification information indicates that the first service is ready, for example, the identification information may be "1111", "YYYY", or other identification information. It should be noted that the examples of the second information herein are merely for ease of understanding of this solution, and are not used to limit this solution.

105: In response to the received second information, the first process triggers to continue to perform the second step.

In embodiments of this application, in response to the received second information, each first process may wake up the initialization procedure in a waiting state, and trigger to continue to perform the second step in the initialization procedure, to complete the initialization procedure of the first process. Therefore, a service provided by the first process is also ready.

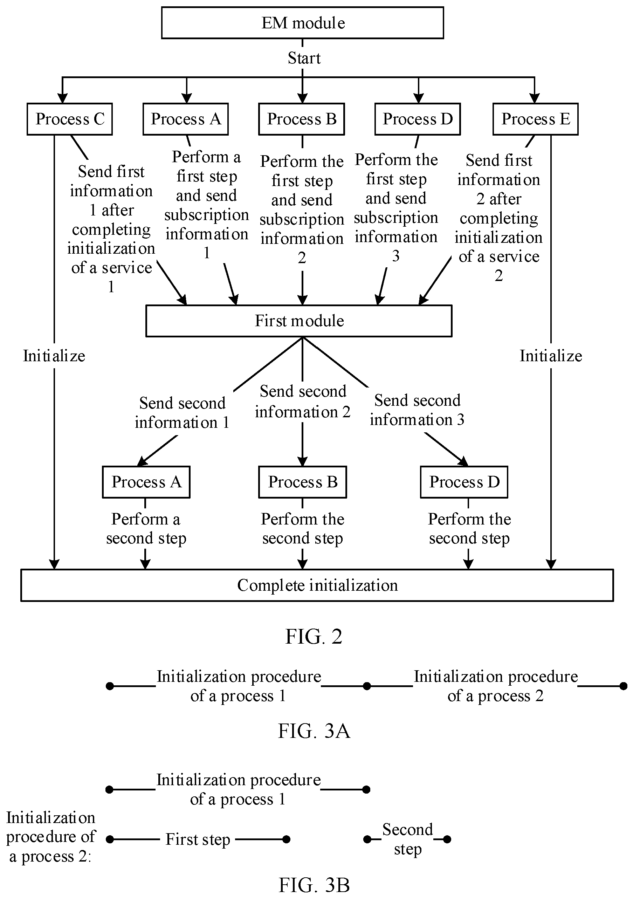

For more intuitive understanding of this solution, refer to FIG. 2 and FIG. 3A and FIG. 3B. FIG. 2 is another diagram of a process initialization method according to an embodiment of this application. FIG. 3A and FIG. 3B are a diagram of beneficial effect brought by a method according to this application. In FIG. 2, for example, a process set includes a process A, a process B, a process C, a process D, and a process E, both the process A and the process B depend on a service 1 provided by the process C, the process C does not depend on a service provided by another process in the process set, the process D depends on a service 2 provided by the process E, and the process E does not depend on a service provided by another process in the process set. The service 1 is provided by using the process C, and the service 2 and a service 3 are provided by using the process E. In an initialization procedure of the process E, the service 2 is initialized, and then the service 3 is initialized. It should be noted that, in the example in FIG. 2, there is a dependency 1 between the process A and the process C. In the dependency 1, the process A is a first process, and the process C is a second process. There is a dependency 2 between the process B and the process C. In the dependency 2, the process B is a first process, and the process C is a second process. There is a dependency 3 between the process D and the process E. In the dependency 3, the process D is a first process, and the process E is a second process.

After the execution management module starts all the processes in the process set, the process A, the process B, the process C, the process D, and the process E are triggered to be initialized in parallel.

Because the process A and the process B depend on the service 1 provided by the process C, and the process D depends on the service 2 provided by the process E, when performing a first step in an initialization procedure, the process A sends subscription information 1 to the first module. The subscription information 1 is used to notify the first module that the process A has subscribed to a service ready notification of the service 1. When performing a first step in an initialization procedure, the process B sends subscription information 2 to the first module. The subscription information 2 is used to notify the first module that the process B has subscribed to the service ready notification of the service 1. When performing a first step in an initialization procedure, the process D sends subscription information 3 to the first module. The subscription information 3 is used to notify the first module that the process D has subscribed to a service ready notification of the service 2.

Because the process C and the process E do not depend on a service provided by another process in the process set, after the process C and the process E start to perform initialization, the entire initialization procedure may be directly completed. After the process C completes an initialization procedure, that is, the process C completes initialization of the service 1, the process C may send first information 1 to the first module. The first information 1 is used to notify the first module that the service 1 is ready. In the initialization procedure of the process E, after completing initialization of the service 2, the process E may send first information 2 to the first module. The first information 2 is used to notify the first module that the service 2 is ready. The process E may continue to initialize the service 3 in parallel, to complete the entire initialization procedure of the process E.

The first module may send second information 1 to the process A, where the second information 1 is used to notify the process A that the service 1 is ready. The first module may further send second information 2 to the process B, where the second information 2 is used to notify the process B that the service 1 is ready. The first module may further send second information 3 to the process D, where the second information 3 is used to notify the process D that the service 2 is ready.

In response to the received second information 1, the process A triggers to continue to perform a second step in the initialization procedure, to complete the initialization procedure of the process A. In response to the received second information 2, the process B triggers to continue to perform a second step in the initialization procedure, to complete the initialization procedure of the process B. In response to the received second information 3, the process D triggers to continue to perform a second step in the initialization procedure, to complete the initialization procedure of the process D. It should be understood that the examples in FIG. 3A and FIG. 3B are merely for ease of understanding of this solution, and are not intended to limit this solution.

FIG. 3A and FIG. 3B are two sub-diagrams. In FIG. 3A and FIG. 3B, a process 1 and a process 2 are as an example, and the process 1 depends on a service provided by the process 2. First, refer to FIG. 3A. In a related technology, an initialization procedure of the process 1 is performed, and then an initialization procedure of the process 2 is performed after the initialization procedure of the process 1 is completed. In other words, the initialization procedures of the process 1 and the process 2 are completely serial. Refer to FIG. 3B. When the method provided in this application is used, because the execution management module starts the process 1 and the process 2 in parallel, the process 1 and the process 2 start to perform an initialization procedure in parallel. After completing the first step, the process 1 enters a pause state. After the process 2 completes the initialization procedure, the process 1 starts to perform the second step, so as to complete the initialization procedure of the process 1. It can be learned from comparison between FIG. 3A and FIG. 3B that, according to the method provided in this application, time required for performing a first step by the process 1 can be reduced, to greatly shorten total duration of performing initialization procedures by the plurality of processes. It should be understood that the examples in FIG. 3A and FIG. 3B are merely for ease of understanding this solution, and are not intended to limit this solution.

In embodiments of this application, based on the foregoing solutions, the first step in the initialization procedure of the first process and the initialization procedure of the second process are executed in parallel. In other words, some steps in the initialization procedures of the first process and the second process that have a dependency are performed in parallel. In comparison with a serial manner used between processes that have a dependency, total duration consumed by initialization procedures of the entire process set is shortened, and efficiency of the initialization procedures of the entire process set is improved.

In addition, the foregoing descriptions provide which steps are specifically represented by the first step, to reduce implementation difficulty of this solution. The steps such as "loading the dynamic link library, reading the configuration file and the configuration parameter that are of the first process, requesting the resource used by the first process, communicating with the hardware corresponding to the first process, and generating the data corresponding to the service of the first process" in the initialization procedure do not need to depend on a service provided by another process, and are time-consuming. In the method provided in this application, when the first process depends on the first service provided by the second process, the first step performed by the first process and the initialization procedure performed by the second process are parallel. Therefore, in comparison with the first process starting to perform initialization after the second process completes initialization, larger duration of the first step indicates more time saved according to the method provided in the application.

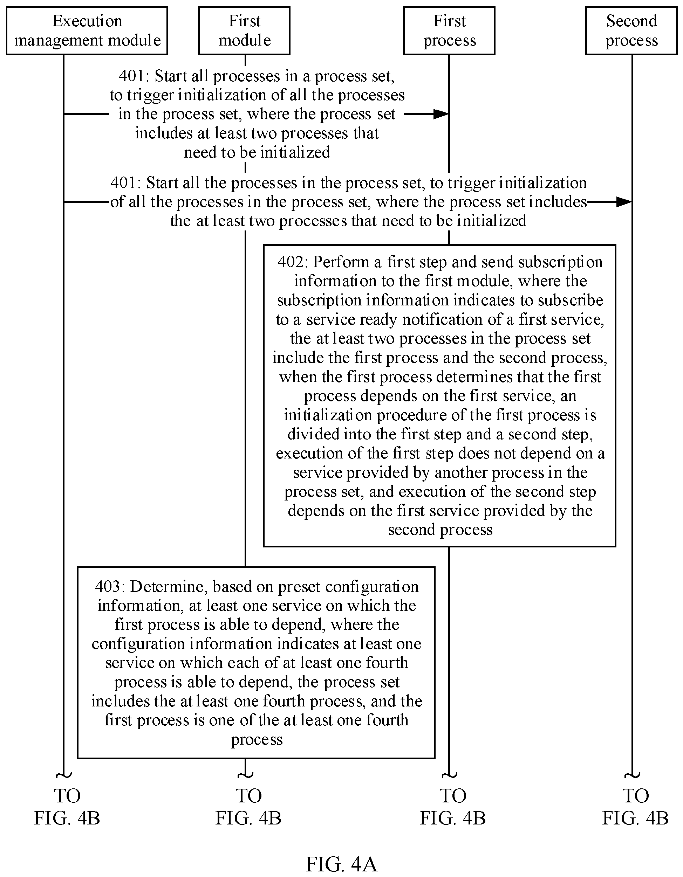

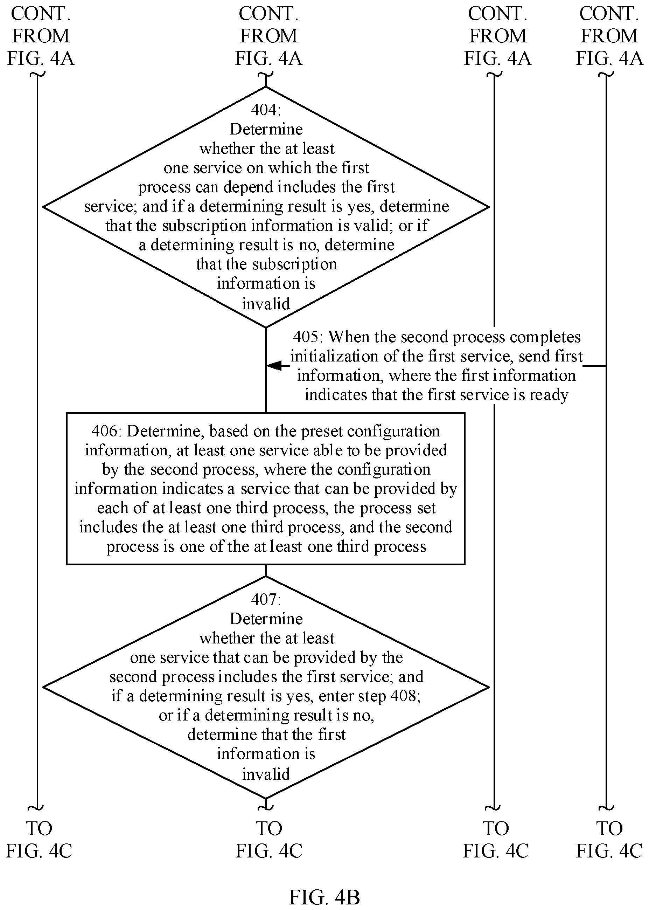

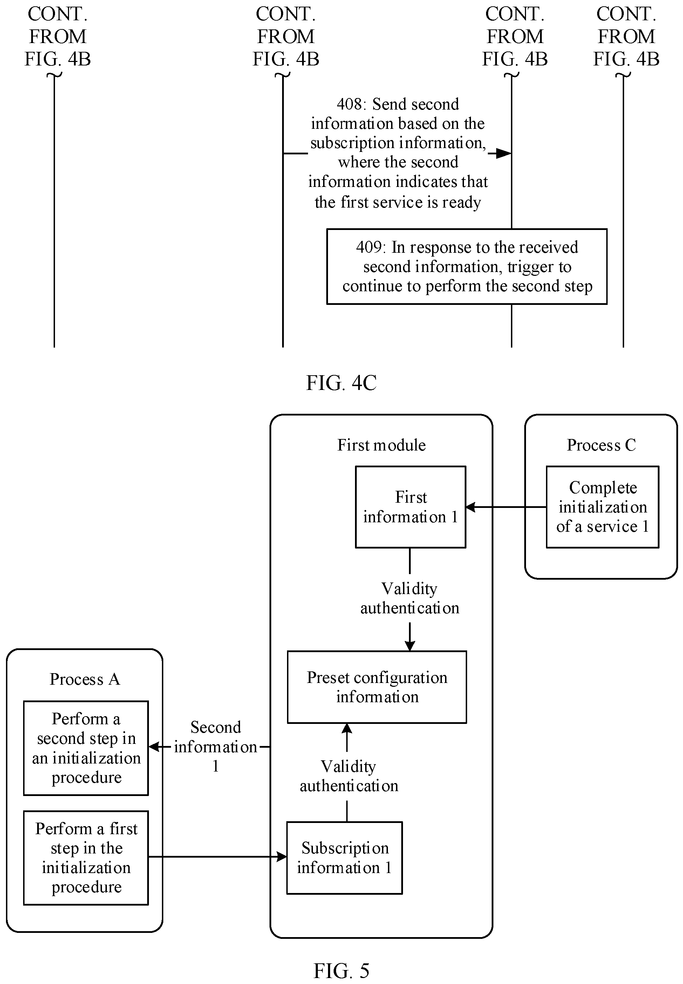

Optionally, according to the embodiment corresponding to FIG. 1, FIG. 4A to FIG. 4C are another schematic flowchart of a process initialization method according to an embodiment of this application. The process initialization method provided in embodiments of this application may include the following steps.

401: An execution management module starts all processes in a process set, to trigger initialization of all the processes in the process set, where the process set includes at least two processes that need to be initialized.

In this embodiment of this application, for a specific implementation of step 401, refer to the foregoing descriptions of step 101. Details are not described herein again.

Before performing step 401, the EM starts a first module, to trigger the first module to perform initialization. Optionally, in an initialization procedure of the first module, the first module may load preset configuration information. The configuration information indicates a service that can be provided by each of at least one third process, and the process set includes the at least one third process; and/or the configuration information indicates at least one service on which each of at least one fourth process can depend, and the process set includes the at least one fourth process; and/or the configuration information may further indicate other information or the like. Examples are not exhaustive herein.

The at least one third process includes a second process, and the at least one fourth process includes a first process. It should be noted that the "third process" is a process that is recorded in the configuration information and that can provide a service. For example, in a case, all processes included in the at least one third process may be a subset of the process set, and each of the at least one third process can provide a service for another process in the process set. In another case, a range of "the at least one third process" is the same as that of "the process set", that is, each process in the process set is a third process, and the configuration information indicates a service that can be provided by each process in the process set. The "fourth process" is a process that is recorded in the configuration information and that needs to depend on a service provided by another process in the process set. The "first process" and the "second process" are a group of processes that have a dependency and that are included in all processes that need to be initialized in the initialization procedure. In this case, the first process is one of the at least one fourth process, and the second process in the at least one third process provides a service on which the first process depends.

The configuration information may include identity information of each third process and information about the service that can be provided by each third process. The configuration information may further include identity information of each fourth process and information about each of the at least one service on which each fourth process can depend. For example, the identity information of the third process may be a name of the third process or other identity information. The information about the service that can be provided by the third process may be a name of the service, other information, or the like. The identity information of the fourth process may be a name of the fourth process, other identity information, or the like. The information about the service on which the fourth process can depend may be a name of the service on which the fourth process can depend, or the like. This is not limited herein.

For example, the configuration information may record at least one legitimate second dependency, and any second dependency in the at least one legitimate second dependency may be that a fourth process depends on a service provided by a third process. The fourth process is a depending party recorded in the configuration information, and the third process is a depended party recorded in the configuration information. Each legitimate dependency recorded in the configuration information includes the identity information of the third process, the information about the service provided by the third process, and the identity information of the fourth process. For ease of understanding this solution, the following shows the configuration information in a form of a table. Refer to Table 1.

**Table 1**

| | |
|---|---|
| Dependency A | A process A depends on a service 1 provided by a process C |
| Dependency B | A process B depends on the service 1 provided by the process C |
| Dependency C | A process D depends on a service 2 provided by a process E |
| Dependency D | A process F depends on the service 2 provided by the process E |
| Dependency E | The process F depends on a service 3 provided by the process E |
| Dependency F | A process H depends on a service 4 provided by a process G |
| ... | |

As shown in a row 1 in Table 1, the process A depending on the service 1 provided by the process C is a legitimate dependency. The process A may be understood as the identity information of the fourth process recorded in the configuration information, the process C may be understood as the identity information of the third process recorded in the configuration information, and the service 1 is the information about the service provided by the third process. For content in a row 2 to a row 6 in Table 1, refer to the foregoing descriptions of the row 1 for understanding. Details are not described herein again. It should be noted that Table 1 merely uses six dependencies: the dependency A, the dependency B, the dependency C, the dependency D, the dependency E, and the dependency F as examples to explain the at least one legitimate dependency recorded in the configuration information, and is not intended to limit this solution.

Optionally, the configuration information may further include a first correspondence, and each first correspondence includes identity information of one third process and information about a service that can be provided by the third process. For more intuitive understanding of this solution, refer to Table 2 below.

**Table 2**

| Identity information of a process | Information about a service that can be provided by the process |
|---|---|
| Process C | Service 1 |
| Process E | Service 2 and service 3 |
| Process G | Service 4 |
| ... | |

As shown in a row 2 in Table 2, the process C is an example of the third process, and the service 1 is an example of all services that can be provided by the third process. For content in a row 3 and a row 4 in Table 2, refer to the foregoing descriptions of the row 2 for understanding. Details are not described herein again. It should be noted that the example in Table 2 is merely for ease of understanding this solution, and is not intended to limit this solution.

Optionally, the configuration information further includes a second correspondence, and each second correspondence includes identity information of one fourth process and information about each of at least one service on which the fourth process can depend. For more intuitive understanding of this solution, refer to Table 3 below.

**Table 3**

| Identity information of a process | Information about a service on which the process depends |
|---|---|
| Process A | Service 1 |
| Process B | Service 1 |
| Process D | Service 2 |
| Process F | Service 2 and service 3 |
| Process H | Service 4 |
| ... | |

As shown in a row 2 in Table 3, the process A is an example of the fourth process, and the service 1 is an example of the service on which the fourth process depends. For content in a row 3 to a row 6 in Table 3, refer to the foregoing descriptions of the row 2 for understanding. Details are not described herein again. It should be noted that the example in Table 3 is merely for ease of understanding this solution, and is not intended to limit this solution.

Optionally, after starting all the processes in the process set, the execution management module may obtain a process identifier (process identification, PID) of each process in the process set. PIDs of the processes in the process set includes a PID of the first process and a PID of the second process. The execution management module may send the PID of each process in the process set to the first module. Correspondingly, the first module can obtain the PID of each process in the process set. For example, the execution management module may send first mapping information to the first module, and the first mapping information includes a mapping relationship between identity information of each process in the process set and the PID of each process in the process set.

The "process identifier" may also be referred to as a "process identification number". The PID is randomly allocated by an operating system when the process is run, and the PID does not change when the process is run. However, after the process stops running, the PID is reclaimed by the operating system, and may be continuously allocated to a new process that is run. In other words, when the first process is run, the PID of the first process can temporarily and uniquely point to the first process. When the second process is run, the PID of the second process can temporarily and uniquely point to the second process.

For example, after completing initialization, the first module may construct a one-to-one fourth communication pipeline between the first module and the execution management module, and the fourth communication pipeline is used to enable the first module to receive a message from the execution management module, so that the execution management module may send the PID of each process in the process set to the first module through the fourth communication pipeline. For example, the execution management module may send the first mapping information to the first module through the fourth communication pipeline.

402: The first process performs a first step and sends subscription information to the first module, where the subscription information indicates to subscribe to a service ready notification of a first service, the at least two processes in the process set include the first process and the second process, when the first process determines that the first process depends on the first service, an initialization procedure of the first process is divided into the first step and a second step, execution of the first step does not depend on a service provided by another process in the process set, and execution of the second step depends on the first service provided by the second process.

In this embodiment of this application, for a specific implementation of step 402, refer to the foregoing descriptions of step 102. Details are not described herein again.

Optionally, after completing initialization, the first module may create a one-to-one communication pipeline between the first module and each first process. The one-to-one communication pipeline between the first module and each first process includes a first communication pipeline and a second communication pipeline. The first communication pipeline is used to enable the first module to receive a message from the first process, and the second communication pipeline is used to enable the first process to receive a message from the first module.

Optionally, after completing initialization, the first module may create a one-to-one communication pipeline between the first module and each fourth process based on the configuration information. Because the at least one fourth process includes the first process, the one-to-one communication pipeline between the first module and each fourth process includes a first communication pipeline and a second communication pipeline.

Optionally, the first module may create a one-to-one communication pipeline between the first module and each first process based on the PID of the first process. In this case, the first module may store second mapping information, and the second mapping information includes a mapping relationship between an interface of each communication pipeline constructed by the first module and a PID. The second mapping information includes a mapping relationship between an interface of the first communication pipeline and the PID of the first process and a mapping relationship between an interface of a second communication pipeline and the PID of the first process.

During running of each process, the PID of the process can temporarily and uniquely point to the process, and the first module may determine, based on an interface of each communication pipeline, a PID corresponding to the interface of the communication pipeline, that is, can determine, based on the interface of each communication pipeline, a process corresponding to the interface of the communication pipeline. Therefore, the first module can determine a PID corresponding to the interface of the first communication pipeline, that is, can determine, based on the interface of the first communication pipeline, that information obtained from the interface of the first communication pipeline is sent by the first process. The first module can further determine a PID corresponding to the interface of the second communication pipeline, that is, can determine, based on the interface of the second communication pipeline, that information written into the interface of the second communication pipeline is sent to the first process.

In step 402, the first process performs the first step and sends the subscription information to the first module through the first communication pipeline. Correspondingly, the first module may receive the subscription information through the first communication pipeline, and determine, based on the subscription information received from the first communication pipeline, that the first process expects to subscribe to the service ready notification of the first service provided by the second process.

For example, because the first module receives the subscription information from the first communication pipeline, the first module may determine, based on the interface of the first communication pipeline and the second mapping information, a PID of a process that sends the subscription information through the first communication pipeline, and further determine the identity information of the first process based on the determined PID and the first mapping information.

For example, the first process may simultaneously perform the first step and send the subscription information to the first module through the first communication pipeline; or the first process may send the subscription information to the first module through the first communication pipeline after performing the first step; or perform the first step after sending the subscription information to the first module through the first communication pipeline. This may be specifically determined based on an actual situation. This is not limited in this application.

It should be noted that the first module and the first process may alternatively communicate with each other in another manner. For example, the first module and the first process may alternatively communicate with each other in a memory sharing manner. This is not limited in embodiments of this application.

For example, in an implementation, the subscription information may carry the identity information of the first service. For example, the identity information of the first service may include a name of the first service. In this case, the first module may determine, based on the identity information that is of the first service and that is carried in the subscription information, a service (namely, the first service) whose service ready notification the first process expects to subscribe to, and may further determine, based on the preset configuration information, which process (namely, the second process) provides the first service.

In another implementation, the subscription information may carry the identity information of the second process and the identity information of the first service. For example, the identity information of the second process may include a name of the second process, and the identity information of the first service may include a name of the first service. In this case, the first module may determine, based on the identity information of the second process and the identity information of the first service that are carried in the subscription information, that the first process expects to subscribe to the service ready notification of the first service provided by the second process.

Optionally, the subscription information may further carry other information, for example, the identity information of the first process, the PID of the first process, or other information. Specific information carried in the subscription information may be determined based on an actual application scenario. This is not limited in this embodiment of this application.

403: The first module determines, based on the preset configuration information, at least one service on which the first process is able to depend, where the configuration information indicates the at least one service on which each of the at least one fourth process is able to depend, the process set includes the at least one fourth process, and the first process is one of the at least one fourth process.

In this embodiment of this application, step 403 is an optional step. After obtaining the subscription information, the first module may further determine, based on the preset configuration information, the at least one service on which the first process is able to depend.

For example, in an implementation, because the first module obtains the subscription information from the first communication pipeline, the first module may determine, based on the interface of the first communication pipeline and the second mapping information, a PID of a process that sends the subscription information, and then determine, based on the PID of the process that sends the subscription information and the first mapping information, identity information of the process that sends the subscription information. In other words, the first module may determine the identity information of the first process based on the interface of the first communication pipeline. Because the preset configuration information indicates the at least one service on which each of the at least one fourth process can depend, and the at least one fourth process includes the first process, the first module may determine, from the preset configuration information based on the identity information of the first process, the at least one service on which the first process can depend.

In this embodiment of this application, the first module creates, based on the PID of the first process, the first communication pipeline and the second communication pipeline that are used for communication between the first module and the first process, so that the first module can determine the mapping relationship between the interface of the first communication pipeline and the PID of the first process, and the mapping relationship between the interface of the second communication pipeline and the PID of the first process. Therefore, the first module can determine, based on the mapping relationship between the communication pipeline and the PID of the process, which process information transmitted through a communication pipeline is from, to prevent a process from spoofing another process to send subscription information to the first module, that is, improve authenticity and security of a procedure of "subscribe to a ready notification of a service".

In another implementation, the first module may alternatively obtain the PID of the first process from the subscription information, determine the identity information of the first process based on the PID of the first process and the first mapping information, and determine, from the preset configuration information based on the identity information of the first process, the at least one service on which the first process can depend.

404: The first module determines whether the at least one service on which the first process can depend includes the first service; and if a determining result is yes, determines that the subscription information is valid; or if a determining result is no, determines that the subscription information is invalid.

In this embodiment of this application, step 404 is an optional step. If the determining result is yes, that is, when the first module determines that the at least one service on which the first process can depend includes the first service, the first module may determine that the subscription information is valid, that is, determine that the first process can successfully subscribe to the service ready notification of the first service provided by the second process. If the determining result is no, that is, when the first module determines that the at least one service on which the first process can depend does not include the first service, the first module may determine that the subscription information is invalid, that is, determine that the first process fails to subscribe to the service ready notification of the first service provided by the second process, and may not perform subsequent steps.

405: When the second process completes initialization of the first service, send first information to the first module, where the first information indicates that the first service is ready.

In this embodiment of this application, for an implementation of step 405, refer to the foregoing descriptions of step 103. Details are not described herein again.

Optionally, after completing initialization, the first module may create a third communication pipeline between the first module and the second process. The third communication pipeline is used to transmit the first information, that is, used by the first module to receive the first information from the second process.

Optionally, after completing initialization, the first module may create a one-to-one communication pipeline between the first module and each third process based on the preset configuration information. Because the at least one third process includes the second process, the one-to-one communication pipeline between the first module and each third process includes a third communication pipeline.

For example, the first module may create the one-to-one third communication pipeline between the first module and the second process based on the PID of the second process. The second mapping information further includes a mapping relationship between the PID of the second process and an interface of the third communication pipeline between the first module and the second process. In this case, the first module can determine the PID corresponding to the interface of the third communication pipeline.

In step 405, when the second process completes initialization of the first service, the second process may send the first information to the first module through the third communication pipeline. Correspondingly, the first module may receive the first information through the third communication pipeline.

For example, because the first module receives the first information from the third communication pipeline, the first module may determine, based on the second mapping information, the PID corresponding to the interface of the third communication pipeline, and further determine the identity information of the second process based on the PID corresponding to the interface of the third communication pipeline and the first mapping information.

For example, the first information includes the identity information of the first service, and the identity information of the first service indicates that the first service is ready. Optionally, the first information further includes the identity information of the second process, the PID of the second process, and/or other information, and the like. Specific information carried in the first information may be flexibly set based on an actual application scenario.

406: The first module determines, based on the preset configuration information, at least one service able to be provided by the second process, where the configuration information indicates the service that can be provided by each of the at least one third process, the process set includes the at least one third process, and the second process is one of the at least one third process.

In this embodiment of this application, step 406 is an optional step. For example, in an implementation, because the first module obtains the first information from the third communication pipeline, the first module may determine, based on the interface of the third communication pipeline and the second mapping information, a PID of a process that sends the first information, and then determine, based on the PID of the process that sends the first information and the first mapping information, identity information of the process that sends the first information. In other words, the first module may determine the identity information of the second process based on the interface of the third communication pipeline. Because the preset configuration information indicates the at least one service on which each of the at least one fourth process can depend, and the at least one fourth process includes the second process, the first module may determine, from the preset configuration information based on the identity information of the second process, the at least one service that can be provided by the second process.

In another implementation, the first module may alternatively obtain the PID of the second process from the first information, determine the identity information of the second process based on the PID of the second process and the first mapping information, and determine, from the preset configuration information based on the identity information of the second process, the at least one service that can be provided by the second process.

In this embodiment of this application, the first module creates, based on the PID of the second process, the third communication pipeline used for communication between the first module and the second process, so that the first module can determine a mapping relationship between an interface of the third communication pipeline and the PID of the second process. Therefore, the first module can determine, based on the mapping relationship between the communication pipeline and the PID of the process, which process information transmitted through a communication pipeline is from, to prevent a process from spoofing another process to send first information to the first module. This improves accuracy of the first information obtained by the first module. When performing the second step in the initialization procedure, the first process needs to ensure that the first service is ready. Therefore, "improving accuracy of the first information" also helps prevent the first process from being stuck when performing the second step in the initialization procedure, and helps improve smoothness of executing the initialization procedure by the first process.

After starting all the processes in the process set, the execution management module can conveniently obtain the PIDs of the processes in the process set, and the execution management module sends the PIDs of the processes in the process set to the first module, so that the first module can construct a one-to-one communication pipeline between the first module and the process based on the PID of the process. This provides a convenient solution of "obtaining the PID of the process by the first module", and the PID of the process obtained by the execution management module is authentic, to further ensure authenticity of the information obtained by the first module through the communication pipeline. It should be noted that the first module may alternatively obtain the PID of the first process and the PID of the second process in another manner. For example, the first module may alternatively obtain the PID of the first process and the PID of the second process from the kernel of the operating system (operating system, OS). Manners of obtaining the PID of the process by the first module are not enumerated in this embodiment of this application.

407: The first module determines whether the at least one service that can be provided by the second process includes the first service; and if a determining result is yes, enters step 408; or if a determining result is no, determines that the first information is invalid.

In this embodiment of this application, step 407 is an optional step. After determining the at least one service that can be provided by the second process, the first module may determine whether the at least one service that can be provided by the second process includes the first service. If the determining result is yes, it indicates that the first information sent by the second process is valid, that is, it is determined that the first service is ready. If the determining result is no, it indicates that the second process does not provide the first service, and it can be determined that the first information is invalid and the first service is not ready. In this case, the first module may continue to wait.

408: The first module sends second information to the first process based on the subscription information, where the second information indicates that the first service is ready.

In this embodiment of this application, for a specific implementation of step 408, refer to the foregoing descriptions of step 104 for understanding. Details are not described herein again. For example, the first module may send the second information to the first process through the second communication pipeline, and the second information is used to notify the first process that the first service is ready. In this embodiment of this application, because the first module constructs the first communication pipeline and the second communication pipeline based on the PID of the first process, and the PID of the process can temporarily and uniquely point to one process, the first module can determine a mapping relationship between each communication pipeline and the PID of the process. After determining that the first service is ready, the first module can ensure that the process that subscribes to the ready notification of the first service can receive the second information. This ensures smoothness of the initialization procedure of the first process, and also helps reduce duration of "all the processes in the process set to complete the initialization procedures".

Step 403, step 404, step 406, and step 407 are optional. If step 403, 404, step 406, and step 407 are performed, step 408 may include: sending the second information to the first process when the first module determines that the at least one service on which the first process can depend includes the first service (that is, the subscription information is valid), and the at least one service that can be provided by the second process includes the first service.

If step 403 and step 404 are performed, and step 406 and step 407 are not performed, after step 405 is performed, step 408 may be directly performed. Step 408 may include: sending the second information to the first process when the first module determines that the at least one service on which the first process can depend includes the first service (that is, the subscription information is valid).

If step 406 and step 407 are performed, and step 403 and step 404 are not performed, step 408 may include: sending the second information to the first process when the at least one service that can be provided by the second process includes the first service.

For more intuitive understanding of this solution, refer to FIG. 5. FIG. 5 is another diagram of a process initialization method according to an embodiment of this application. As shown in FIG. 5, when performing the first step in the initialization procedure, the process A sends subscription information 1 to the first module. The subscription information 1 indicates to subscribe to a service ready notification of the service 1. After obtaining the subscription information 1, the first module may determine that the process A expects to subscribe to the service 1 provided by the process C, and may perform validity authentication on the subscription information 1 based on the preset configuration information (that is, determine whether the subscription information 1 is valid). After completing initialization of the service 1, the process C may also send first information 1 to the first module. The first information 1 indicates that the service 1 is ready. After obtaining the first information 1, the first module may perform validity authentication on the first information 1 based on the configuration information (that is, determine whether the first information 1 is valid). When the subscription information 1 is valid and the first information 1 is valid, the first module sends second information 1 to the process A, where the second information 1 indicates that the service 1 is ready, to trigger the process A to continue to perform the second step. It should be understood that the example in FIG. 5 is merely for ease of understanding this solution, and is not intended to limit this solution.

In this embodiment of this application, the preset configuration information is deployed in the first module, and the configuration information indicates at least one service on which each of the at least one fourth process included in the first device can legally depend. Further, after the subscription information sent by the first process is received, whether the at least one service on which the first process can depend includes the first service in the subscription information can be determined, that is, validity of the subscription information is determined based on the configuration information. This ensures that the service ready notification can be successfully subscribed only based on a legitimate dependency, and further improves security of this solution.

The configuration information further indicates the at least one service that can be provided by each of the at least one third process. In this case, after receiving the first information from the second process, the first module can determine whether the at least one service provided by the second process includes the first service in the first information, and it is determined that the first information is valid only when the at least one service that can be provided by the second process includes the first service, so that the second information is sent to the first process. Therefore, when another process spoofs the second process to send a service ready notification of the first service to the first module, the first module can identify the service ready notification in time, to help improve accuracy of the second information sent by the first module to the first process. This further prevents the first process from being stuck when performing the second step, to ensure smoothness of the initialization procedure.

409: In response to the received second information, the first process triggers to continue to perform the second step.

In this embodiment of this application, for a specific implementation of step 409, refer to the foregoing descriptions of step 105 for understanding. Details are not described herein again.

To more intuitively understand beneficial effect brought by the method provided in this application, the following provides description based on specific experiments. For example, experiments are performed on a vehicle-mounted system in a vehicle. A process set includes 13 processes. In a related technology, the 13 processes are grouped into three groups of processes, and the three groups of processes may include a first group, a second group, and a third group. An initialization procedure of processes in the second group depends on a service provided by processes in the first group, an initialization procedure of processes in the third group depends on a service provided by the processes in the second group. Initialization of all the processes in the first group is first completed in parallel, initialization of all the processes in the second group is completed in parallel, and then initialization of all the processes in the third group is completed in parallel.

In the method provided in this application, all the 13 processes are first started, and the 13 processes are triggered to start to perform initialization procedures in parallel. The processes in the second group and the third group all enter a waiting state after completing the first step. The processes in the first group directly complete an initialization procedure. After the service provided by the processes in the first group is ready, the processes in the second group are triggered to continue to perform the second step, to complete the initialization procedure. After the service provided by the processes in the second group is ready, the processes in the third group are triggered to continue to perform the second step, to complete the initialization procedure. Duration of an operation of "all the 13 processes completing the initialization procedure" is reduced by 40%.

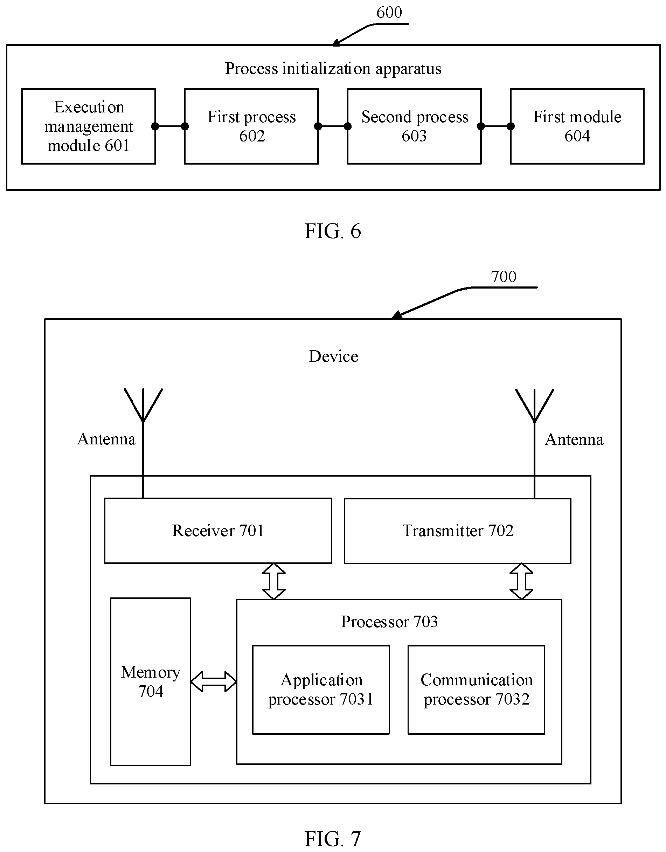

Based on embodiments corresponding to FIG. 1 to FIG. 5, to better implement the foregoing solutions in embodiments of this application, the following further provides a related device configured to implement the foregoing solutions. Specifically, FIG. 6 is a diagram of a structure of a process initialization apparatus according to an embodiment of this application. A process initialization apparatus 600 includes: an execution management module 601, configured to start all processes in a process set, to trigger initialization of all the processes in the process set, where the process set includes at least two processes that need to be initialized, and the at least two processes include a first process and a second process; the first process 602, configured to perform a first step and send subscription information to a first module, where the subscription information indicates to subscribe to a service ready notification of a first service, when the first process determines that the first process depends on the first service, an initialization procedure of the first process is divided into the first step and a second step, execution of the first step does not depend on a service provided by another process in the process set, and execution of the second step depends on the first service provided by the second process; the second process 603, configured to: when the second process completes initialization of the first service, send first information to the first module, where the first information indicates that the first service is ready; and the first module 604, configured to send second information to the first process based on the subscription information, where the second information indicates that the first service is ready. The first process 602 is further configured to: in response to the received second information, trigger to continue to perform the second step.

Optionally, the first module 604 is further configured to determine, based on preset configuration information, at least one service able to be provided by the second process, where the configuration information indicates a service able to be provided by each of at least one third process, the process set includes the at least one third process, and the second process is one of the at least one third process. The first module 604 is specifically configured to: when the first module 604 determines that the at least one service able to be provided by the second process includes the first service, send the second information to the first process.

Optionally, the first module 604 is further configured to determine, based on the preset configuration information, at least one service on which the first process is able to depend, where the configuration information indicates at least one service on which each of at least one fourth process is able to depend, the process set includes the at least one fourth process, and the first process is one of the at least one fourth process. The first module 604 is specifically configured to: when the first module 604 determines that the at least one service on which the first process is able to depend includes the first service, send the second information to the first process.

Optionally, the first module 604 is further configured to create a first communication pipeline and a second communication pipeline between the first module 604 and the first process based on a process identifier PID of the first process, where the first communication pipeline is used to transmit the subscription information, and the second communication pipeline is used to transmit the second information; and/or the first module 604 is further configured to create a third communication pipeline between the first module 604 and the second process based on a PID of the second process, where the third communication pipeline is used to transmit the first information.

Optionally, the execution management module 601 is further configured to send PIDs of the processes in the process set to the first module 604, where the PIDs of the processes in the process set include the PID of the first process and the PID of the second process.

Optionally, the first step includes at least one of the following steps: loading a dynamic link library, reading a configuration file and a configuration parameter that are of the first process, requesting a resource used by the first process, communicating with hardware corresponding to the first process, or generating data corresponding to a service of the first process.

Optionally, the process initialization apparatus 600 is used in a device, and the device is any one of the following: a vehicle, a robot, a home device, an industrial personal computer, a mobile phone, or a tablet.

It should be noted that content such as information exchange and an execution procedure between the modules/units in the process initialization apparatus 600 is based on a same concept as the method embodiments corresponding to FIG. 1 to FIG. 5 in this application. For specific content, refer to the descriptions in the foregoing method embodiments of this application. Details are not described herein again.

The following describes a device provided in an embodiment of this application. FIG. 7 is a diagram of a structure of a device according to an embodiment of this application. Specifically, a device 700 includes a receiver 701, a transmitter 702, a processor 703, and a memory 704 (there may be one or more processors 703 in the device 700, and one processor is used as an example in FIG. 7). The processor 703 may include an application processor 7031 and a communication processor 7032. In some embodiments of this application, the receiver 701, the transmitter 702, the processor 703, and the memory 704 may be connected through a bus or in another manner.

The memory 704 may include a read-only memory and a random access memory, and provide instructions and data to the processor 703. A part of the memory 704 may further include a non-volatile random access memory (non-volatile random access memory, NVRAM). The memory 704 stores a processor and operation instructions, an executable module or a data structure, or a subset thereof, or an extended set thereof. The operation instructions may include various operation instructions used to implement various operations.

The processor 703 controls an operation of the device. During specific application, components of the device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 703, or may be implemented by the processor 703. The processor 703 may be an integrated circuit chip and has a signal processing capability. In an implementation process, steps in the foregoing method may be implemented by using a hardware integrated logical circuit in the processor 703, or by using instructions in a form of software. The processor 703 may be a general-purpose processor, a digital signal processor (digital signal processor, DSP), a microprocessor, or a microcontroller. The processor 703 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 703 may implement or perform the method, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 704, and the processor 703 reads information in the memory 704 and completes the steps in the foregoing method in combination with hardware of the processor 703.

The receiver 701 may be configured to receive input digit or character information, and generate a signal input related to related settings and function control of the device. The transmitter 702 may be configured to output digital or character information through a first interface. The transmitter 702 may be further configured to send instructions to a disk group through the first interface, to modify data in the disk group. The transmitter 702 may further include a display device like a display.

In this embodiment of this application, the processor 703 is configured to perform the method performed by the modules and the processes in the first device in embodiments corresponding to FIG. 1 to FIG. 5. It should be noted that a specific manner of performing the foregoing steps by the application processor 7031 in the processor 703 is based on a same concept as the method embodiments corresponding to FIG. 1 to FIG. 5 in this application. Technical effect brought by the specific manner is the same as that of the method embodiments corresponding to FIG. 1 to FIG. 5 in this application. For specific content, refer to the descriptions in the method embodiments in this application. Details are not described herein again.

An embodiment of this application further provides a computer-readable storage medium. The computer-readable storage medium stores a program for signal processing. When the program runs on a computer, the computer is enabled to perform the method described in embodiments shown in FIG. 1 to FIG. 5.

An embodiment of this application further provides a computer program product. The computer program product includes a program. When the program runs on a computer, the computer is enabled to perform the method described in embodiments shown in FIG. 1 to FIG. 5.

The execution device or the training device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip to perform the method described in embodiments shown in FIG. 1 to FIG. 5. Optionally, the storage unit is a storage unit in the chip, for example, a register or a cache. Alternatively, the storage unit may be a storage unit that is in a radio access device end and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits for controlling program execution of the method in the first aspect.

In addition, it should be noted that the described apparatus embodiments are merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A process initialization method, wherein the method comprises:
starting, by an execution management module, all processes in a process set, to trigger initialization of all the processes in the process set, wherein the process set comprises at least two processes that need to be initialized, and the at least two processes comprise a first process and a second process;
performing, by the first process, a first step and sending subscription information to a first module, wherein the subscription information indicates to subscribe to a service ready notification of the first service, when the first process determines that the first process depends on the first service, an initialization procedure of the first process is divided into the first step and a second step, execution of the first step does not depend on a service provided by another process in the process set, and execution of the second step depends on the first service provided by the second process;
when the second process completes initialization of the first service, sending, by the second process, first information to the first module, wherein the first information indicates that the first service is ready;
sending, by the first module, second information to the first process based on the subscription information, wherein the second information indicates that the first service is ready; and
in response to the received second information, triggering, by the first process, to continue to perform the second step.

2. The method according to claim 1, wherein the method further comprises:
determining, by the first module based on preset configuration information, at least one service able to be provided by the second process, wherein the configuration information indicates a service able to be provided by each of at least one third process, the process set comprises the at least one third process, and the second process is one of the at least one third process; and
sending, by the first module, the second information to the first process comprises:
when the first module determines that the at least one service able to be provided by the second process comprises the first service, sending, by the first module, the second information to the first process.

3. The method according to claim 1 or 2, wherein the method further comprises:
determining, by the first module based on the preset configuration information, at least one service on which the first process is able to depend, wherein the configuration information indicates at least one service on which each of at least one fourth process is able to depend, the process set comprises the at least one fourth process, and the first process is one of the at least one fourth process; and
sending, by the first module, the second information to the first process comprises:
when the first module determines that the at least one service on which the first process is able to depend comprises the first service, sending, by the first module, the second information to the first process.

4. The method according to claim 1 or 2, wherein the method further comprises:
creating, by the first module, a first communication pipeline and a second communication pipeline between the first module and the first process based on a process identifier PID of the first process, wherein the first communication pipeline is used to transmit the subscription information, and the second communication pipeline is used to transmit the second information; and/or
creating, by the first module, a third communication pipeline between the first module and the second process based on a PID of the second process, wherein the third communication pipeline is used to transmit the first information.

5. The method according to claim 4, wherein the method further comprises:
sending, by the execution management module, PIDs of the processes in the process set to the first module, wherein the PIDs of the processes in the process set comprise the PID of the first process and the PID of the second process.

6. The method according to claim 1 or 2, wherein the first step comprises at least one of the following steps: loading a dynamic link library, reading a configuration file and a configuration parameter that are of the first process, requesting a resource used by the first process, communicating with hardware corresponding to the first process, or generating data corresponding to a service of the first process.

7. The method according to claim 1 or 2, wherein the method is applied to a device, and the device is any one of the following: a vehicle, a robot, a home device, an industrial personal computer, a mobile phone, or a tablet.

8. A process initialization apparatus, wherein the apparatus comprises:
an execution management module, configured to start all processes in a process set, to trigger initialization of all the processes in the process set, wherein the process set comprises at least two processes that need to be initialized, and the at least two processes comprise a first process and a second process;
the first process, configured to perform a first step and send subscription information to a first module, wherein the subscription information indicates to subscribe to a service ready notification of the first service, when the first process determines that the first process depends on the first service, an initialization procedure of the first process is divided into the first step and a second step, execution of the first step does not depend on a service provided by another process in the process set, and execution of the second step depends on the first service provided by the second process;
the second process, configured to: when the second process completes initialization of the first service, send first information to the first module, wherein the first information indicates that the first service is ready; and
the first module, configured to send second information to the first process based on the subscription information, wherein the second information indicates that the first service is ready, wherein
the first process is further configured to: in response to the received second information, trigger to continue to perform the second step.

9. The apparatus according to claim 8, wherein
the first module is further configured to determine, based on preset configuration information, at least one service able to be provided by the second process, wherein the configuration information indicates a service able to be provided by each of at least one third process, the process set comprises the at least one third process, and the second process is one of the at least one third process; and
the first module is specifically configured to: when the first module determines that the at least one service able to be provided by the second process comprises the first service, send the second information to the first process.

10. The apparatus according to claim 8 or 9, wherein
the first module is further configured to determine, based on the preset configuration information, at least one service on which the first process is able to depend, wherein the configuration information indicates at least one service on which each of at least one fourth process is able to depend, the process set comprises the at least one fourth process, and the first process is one of the at least one fourth process; and
the first module is specifically configured to: when the first module determines that the at least one service on which the first process is able to depend comprises the first service, send the second information to the first process.

11. The apparatus according to claim 8 or 9, wherein
the first module is further configured to create a first communication pipeline and a second communication pipeline between the first module and the first process based on a process identifier PID of the first process, wherein the first communication pipeline is used to transmit the subscription information, and the second communication pipeline is used to transmit the second information; and/or
the first module is further configured to create a third communication pipeline between the first module and the second process based on a PID of the second process, wherein the third communication pipeline is used to transmit the first information.

12. The apparatus according to claim 11, wherein
the execution management module is further configured to send PIDs of the processes in the process set to the first module, wherein the PIDs of the processes in the process set comprise the PID of the first process and the PID of the second process.

13. The apparatus according to claim 8 or 9, wherein the first step comprises at least one of the following steps: loading a dynamic link library, reading a configuration file and a configuration parameter that are of the first process, requesting a resource used by the first process, communicating with hardware corresponding to the first process, or generating data corresponding to a service of the first process.

14. The apparatus according to claim 8 or 9, wherein the apparatus is used in a device, and the device is any one of the following: a vehicle, a robot, a home device, an industrial personal computer, a mobile phone, or a tablet.

15. A device, comprising a processor and a memory, wherein the processor is coupled to the memory;
the memory is configured to store a program; and
the processor is configured to execute the program in the memory, to enable the device to perform the method according to any one of claims 1 to 7.

16. A computer-readable storage medium, wherein the computer-readable storage medium stores a program, and when the program runs on a computer, the computer is enabled to perform the method according to any one of claims 1 to 7.

17. A computer program product, wherein the computer program product comprises a program, and when the program runs on a computer, the computer is enabled to perform the method according to any one of claims 1 to 7.
